(19) Europäisches Patentamt
European Patent Office
Office européen des brevets

(11) Veröffentlichungsnummer: **0 003 059**
**B1**

(12) **EUROPÄISCHE PATENTSCHRIFT**

(21) Anmeldenummer: **78101874.2**

(22) Anmeldetag: **29.12.78**

(51) Int. Cl.³: **C 07 C 103/38,**
A 01 N 37/18

# (54) Herbizid wirksame 4-(p-Phenoxy-phenoxy)-alpha-propionsäure-alkoxyalkylamide, Verfahren zu ihrer Herstellung und sie enthaltende herbizide Mittel und deren Verwendung

(30) Priorität: **10.01.78 CH 223/78**

(43) Veröffentlichungstag der Anmeldung:
**25.07.79 Patentblatt 79/15**

(45) Bekanntmachung des Hinweises auf die Patenterteilung:
**07.01.81 Patentblatt 81/01**

(84) Benannte Vertragsstaaten:
**BE CH DE FR GB IT NL**

(56) Entgegenhaltungen:
**DE - A - 2 433 067**
**DE - A - 2 531 643**
**DE - A - 2 639 796**

(73) Patentinhaber: **CIBA-GEIGY AG**
**Patentabteilung Postfach**
**CH - 4002 Basel (CH)**

(72) Erfinder: **Böhner, Beat, Dr.**
**Hügelweg 3**
**CH - 4102 Binningen (CH)**
**Rohr, Otto, Dr.**
**Kilbertweg 19**
**CH - 4106 Therwil (CH)**

**EP 0 003 059 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Herbizid wirksame 4-(p-Phenoxy-phenoxy)-α-propionsäure-alkoxyalkylamide, Verfahren zu ihrer Herstellung und sie enthaltende herbizide Mittel und deren Verwendung

Vorliegende Erfindung betrifft neue herbizid wirksame, trifluormethylierte 4-(p-Phenoxy-phenoxy)-α-propionsäure-alkoxyalkylamide, Verfahren zu ihrer Herstellung, ferner herbizide Mittel, die diese neuen Verbindungen als Wirkstoffe enthalten, sowie die Verwendung der neuen Wirkstoffe und der sie enthaltenden Mittel zur selektiven Bekämpfung von Unkräutern in Kulturpflanzenbeständen.

In den letzten Jahren ist eine reichhaltige Patentliteratur über herbizid wirksame, in verschiedener Weise substituierte Diphenyläther einschliesslich Phenoxy-phenoxy-alkancarbonsäuren, ihre Salze, Ester und andere Derivate erschienen.

Den nächstliegenden Stand der Technik bilden verschiedene Amide der 4-(p-Trifluormethyl-phenoxy)-α-phenoxy-propionsäure. Amide dieser Säure ohne funktionelle Gruppe im Amidteil sind in den DT—OS 2 433 067, 2 531 643 und 2 639 796 publiziert worden, wie das Amid und das Methylamid. Amide dieser Säure mit Aethergruppen (auch cyclischen) in der Amid-Seitenkette finden sich in der DT—OS 2 531 643 und in der japanischen Offenlegungsschrift 52—130912 wie das N-Methoxyamid und das Morpholid.

Die neuen 4-(p-Trifluormethyl-phenoxy)-α-phenoxy-propionsäure-alkoxyalkylamide vorliegender Erfindung entsprechen der Formel I

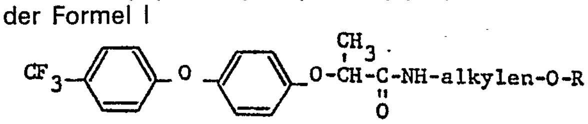 (I)

worin "Alkylen" eine gerade oder verzweigte gesättigte Kohlenwasserstoffkette mit 1 bis 4 C-Atomen, und

R einen Alkylrest mit 1 bis 4 C-Atomen darstellen.

Der Alkylrest kann geradkettig oder verzweigt sein und schliesst also Methyl, Aethyl, Propyl, Isopropyl und die vier möglichen Butylreste mit ein.

Neben Methylen $—CH_2—$ seien als mögliche Alkylenketten

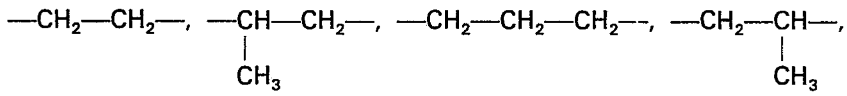

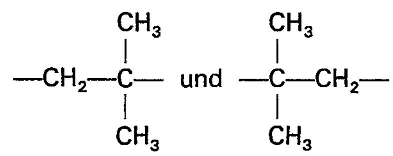 und speziell erwähnt.

Die erfindungsgemässen Wirkstoffe der Formel I und die sie als aktive Komponente enthaltenden herbiziden Mittel sind insbesondere brauchbar zur Bekämpfung grasartiger monocotyler Unkräuter und sind diesbezüglich den oben erwähnten bekannten Amid-Verbindung klar überlegen, insbesondere bei (post-emergenter) Nachauflauf-Anwendung.

Die bekannten Verbindungen zeigen keine genügende herbizide Aktivität gegenüber schwer bekämpfbaren Ungräsern besonders bei niedrigen Aufwandmengen, oder aber sie schädigen bei der zur Bekämpfung der Ungräser notwendigen Aufwandmengen auch die Kulturpflanzen.

Ueberraschenderweise zeigen die erfindungsgemässen neuen Wirkstoffe der Formel I eine bessere herbizide Wirkung als die vorher erwähnten bekannten Produkte. Dabei sind die erfindungsgemässen Verbindungen sehr verträglich gegenüber Kulturpflanzen, wie z.B. Soja, Zuckerrübe, Baumwolle etc. Aufgabe dieser Erfindung war also, neue Wirkstoffe in der Reihe der α-(Phenoxy-phenoxy)-propionsäurederivate zu schaffen, welche bekannten Verbindungen ähnlicher Struktur in der herbiziden Wirkung gegen schwer bekämpfbare monocotyle Unkräuter überlegen und gegenüber wichtigen Kulturpflanzen vertäglich sind, also eine Bereicherung der Technik darstellen.

Zur Herstellung der neuen Wirkstoffe der Formel I dienen an sich bekannte Verfahren:

Nach einem dieser Verfahren setzt man ein entsprechendes 4-Trifluormethylphenoxy-α-phenoxy-propionsäurehalogenid der Formel II

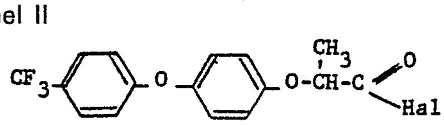 (II)

worin Hal ein Halogenatom, insbesondere Chlor darstellt, in Gegenwart eines basischen Säureakzeptors mit einem Alkoxyalkylamin der Formel III

$$H_2N—alkylen—O—R \qquad (III)$$

um, worin "Alkylen" und R die unter Formel I gegebenen Bedeutungen haben.

Gemäss einer Variante dieses Verfahrens kann man anstelle des Säurehalogenids der Formel II auch einen niederen Alkylester dieser Säure, insbesondere den Methylester, mit dem Amin der Formel III unter Bedingungen umsetzen, die eine Abspaltung des dem Ester zugrunde liegenden Alkanols (Methanol) bewirken.

Diese Aminolyse von relativ leicht verseifbaren Carbonsäureestern ist eine allgemein anwendbare Methode zur Herstellung von Carbonsäureamiden und kann z.B. durch Dispergieren und Schütteln des Carbonsäureesters in wässerigen Aminlösungen schon in der Kälte erfolgen.

Gemäss einem weiteren Verfahren setzt man den Hydroxy-diphenyläther oder ein Salz desselben der Formel IV

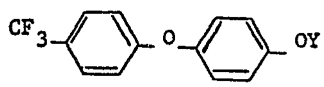 (IV)

worin Y Wasserstoff oder das Kation eines Alkalimetalls bezw. das Aequivalent eines Erdalkalimetallkations bedeutet, mit einem $\alpha$-Halogenpropionsäure-alkoxyalkylamid der Formel V

$$Hal-\underset{\displaystyle CH_3}{\underset{|}{CH}}-CO-NH-alkylen-O-R \qquad (V)$$

in Gegenwart eines säurebindenden Mittels (Base) um.

Die Umsetzungen werden vorzugsweise in einem gegenüber den Reaktionskomponenten inerten Lösungsmittel durchgeführt. Als Lösungsmittel kommen solche aus den verschiedensten Stoffklassen in Frage, wie aliphatische und aromatische, gegebenenfalls chlorierte Kohlenwasserstoffe, z.B. Aethylenchlorid etc., sowie polare organische Lösungsmittel, wie Alkohole, Aether, Ketone, Amide, stabile Ester, z.B. Methyläthylketon, Dimethoxyäthan, Dimethylformamid, Dimethylsulfoxid, Tetrahydrofuran etc.

Als basische Säureakzeptoren für die Umsetzung mit den Halogenverbindungen der Formel II und V können wässerige Alkalimetallhydroxide, wie KOH und NaOH sowie weitere übliche basische Stoffe, wie Karbonate ($K_2CO_3$, $NaHCO_3$), Alkoholate ($NaOCH_3$ und Kalium-tert.butylat), aber auch organische Basen wie Triäthylamin etc. verwendet werden.

Die Ausgangsstoffe der Formeln II bis V sind grösstenteils bekannt. Soweit gewisse unter die Formel III fallende Amine noch neu sein sollten, lassen sie sich nach den für die bekannten Vertreter gebräuchlichen Methoden leicht herstellen. Neue $\alpha$-Halogenpropionsäureamide der Formel V werden aus den entsprechenden Propionsäurehalogeniden und Aminen der Formel III erhalten.

Das nachfolgende Beispiel veranschaulicht die Herstellung eines erfindungsgemässen Wirkstoffs der Formel I. Weitere in entsprechender Weise oder nach einer anderen der erwähnten Methoden hergestellte Wirkstoffe sind anschliessend tabellarisch aufgeführt.

## Beispiel

17,2 g (0,05 Mol) $\alpha$-[4-(p-Trifluormethyl-phenoxy)-phenoxy]-propionsäurechlorid werden zu einem Gemisch von 4,1 g (0,055 Mol) 2-Methoxyäthylamin, 7,5 ml (0.055 Mol) Triäthylamin und 50 ml Methylenchlorid unter Eiskühlung zugetropft. Dabei lässt man die Temperatur auf 20°C ansteigen. Nach zweistündigem Rühren engt man das Reaktionsgemisch ein und filtriert den Rückstand in Aether über eine kleine Kieselgelsäule. Beim Eindampfen des Filtrats erhält man 14,9 g (77,6%) $\alpha$-[4-(p-Trifluormethyl-phenoxy)-phenoxy]-propionsäure-(2-methoxy)-äthylamid vom Fp. 73—75°C.

In analoger Weise wurden auch folgende Verbindungen der Formel I hergestellt:

| Verbing. No. | alkylen–O–R | Fp °C |
|---|---|---|
| 1 | $-CH_2-CH_2-O-CH_3$ | 73–75° |
| 2 | $-CH_2-CH_2-O-C_2H_5$ | 72–73° |
| 3 | $-CH_2-CH_2-O-C_3H_7$(n) | 70–72° |
| 4 | 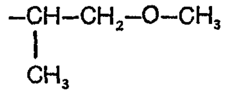 | 62–65° |
| 5 | $-CH_2-CH_2-CH_2-OCH_3$ | 69–70° |
| 6 | $-CH_2-CH_2-CH_2-O-C_2H_5$ | 60–61° |
| 7 | $-CH_2-CH_2-CH_2-O-C_3H_7$(i) | 60–61° |
| 8 | $-CH_2-OCH_3$ | |
| 9 | $-CH_2-O-C_2H_5$ | |
| 10 | 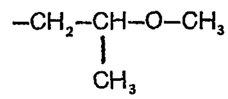 | |
| 11 | 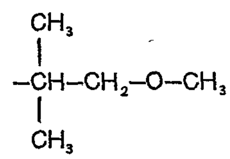 | |
| 12 | 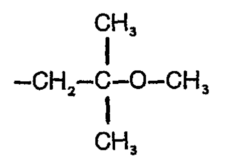 | |

Die Erfindung betrifft auch herbizide Mittel, welche einen neuen Wirkstoff der Formel I enthalten, sowie Verfahren zur pre- und insbesondere post-emergenten Unkrautbekämpfung, insbesondere von monocotylen Ungräsern.

Die erfindungsgemässen Mittel können in den üblichen Formulierungen vorliegen.

Die Herstellung erfindungsgemässer Mittel erfolgt in an sich bekannter Weise durch inniges Vermischen und Vermahlen von Wirkstoffen der Formel I mit geeigneten Trägerstoffen, gegebenenfalls unter Zusatz von gegenüber den Wirkstoffen inerten Dispersions- oder Lösungsmitteln. Die Wirkstoffe können in den folgenden Aufarbeitungsformen vorliegen und angewendet werden:

| | |
|---|---|
| feste Aufarbeitungsformen: | Stäubemittel, Streumittel, Granulate, Umhüllungsgranulate Imprägnierungsgranulate und Homogengranulate; |
| in Wasser dispergierbare Wirkstoffkonzentrate: | Spritzpulver, (wettable powder), Pasten, Emulsionen: |
| flüssige Aufarbeitungsformen: | Lösungen. |

Zur Herstellung fester Aufarbeitungsformen (Stäubemittel, Streumittel, Granulate) werden die Wirkstoffe mit festen Trägerstoffen vermischt. Als Trägerstoffe kommen zum Beispiel Kaolin, Talkum, Bolus, Löss, Kreide, Kalkstein, Kalkgrits, Ataclay, Dolomit, Diatomenerde, gefällte Kieselsäure, Erdalkalisilikate, Natrium- und Kaliumaluminiumsilikate (Feldspäte und Glimmer), Calcium- und Magnesiumsulfate, Magnesiumoxid, gemahlene Kunststoffe, Düngemittel, wie Ammoniumsulfat, Ammoniumphosphat, Ammoniunitrat, Harnstoff, gemahlene pflanzliche Produkte, wie Getreidemehl, Baumrindemehl, Holzmehl, Nussschalenmehl, Cellulosepulver, Rückstände von Pflanzen-extraktionen, Aktivkohle, etc., je für sich oder als Mischungen untereinander in Frage.

Granulate lassen sich herstellen, indem man die Wirkstoffe in einem organischen Lösungsmittel löst und die so erhaltene Lösung auf ein granuliertes Mittel, z.B. Attapulgit, $SiO_2$, Granicalcium oder Bentonit, aufbringt und dann das organische Lösungsmittel wieder verdampft.

Polymerengranulate können hergestellt werden, indem man z.B. ein fertiges, poröses Polymerengranulat, wie Harnstoff/Formaldehyd-Polymerisate, Polyacrylnitril und Polyester, mit bestimmter Oberfläche und günstigem vorausbestimmtem Absorptions/Desorptionsverhältnis mit den Wirkstoffen, z.B. in Form ihrer Lösungen (in einem niedrig siedenden Lösungsmittel), imprägniert und das Lösungsmittel entfernt. Derartige Polymerengranulate können in Form von Mikrogranulaten mit Schüttgewichten von vorzugsweise 300 g/Liter bis 600 g/Liter auch mit Hilfe von Zerstäubern aufgebracht werden. Das Zerstäuben kann über ausgedehnte Behandlungsflächen mit Hilfe von Flugzeugen durchgeführt werden.

Granulate sind auch durch Kompaktieren des Trägermaterials mit den Wirk- und Zusatzstoffen und anschliessendes Zerkleinern erhältlich.

Diesen Mitteln können ferner den Wirkstoff stabilisierende Zusätze und/oder nichtionische, antionaktive und kationenaktive Stoffe zugegeben werden, die beispielsweise die Haftfestigkeit der Wirkstoffe auf Pflanzen und Pflanzenteilen verbessern (Haft- und Klebemittel) und/oder eine bessere Benetzbarkeit (Netzmittel) sowie Dispergierbarkeit (Dispergatoren) gewährleistet. Als Klebemittel kommen beispielweise die folgenden in Frage: Olein-Kalk-Mischung, Cellulose-derivate (Methylcellulose, Carboxymethylcellulose), Hydroxyäthylenglykoläther von Mono- und Dialkylphenolen mit 5 bis 15 Aethylenoxidresten pro Molekül und 8 bis 9 Kohlenstoffatomen im Alkylrest, Ligninsulfonsäure, deren Alkalimetall-und Erdalkalimetallsalze, Polyäthylenglykoläther (Carbowaxe), Fettalkoholpolyglykoläther mit 5 bis 20 Aethylenoxidresten pro Molekül und 8 bis 18 Kohlenstoffatomen im Fettalkoholteil, Kondensations-produkte von Aethylenoxid, Propylenoxid, Polyvinylpyrrolidone, Polyvinylalkohole, Kondensationsprodukte von Harnstoff-Formaldehyd sowie Latex-Produkte.

In Wasser dispergierbare Wirkstoffkonzentrate, d.h. Spritzpulver (wettable powder), Pasten und Emulsionskonzentrate stellen Mittel dar, die mit Wasser auf jede gewünschte Konzentration verdünnt werden können. Sie bestehen aus Wirkstoff, Trägerstoff, gegebenenfalls den Wirkstoff stabilisierenden Zusätzen, oberflächenaktiven Substanzen und Antischaummitteln und gegebenenfalls Lösungsmitteln.

Die Spritzpulver (wettable powder) und Pasten werden erhalten, indem man die Wirkstoffe mit Dispergiermitteln und pulverförmigen Trägerstoffen in geeigneten Vorrichtungen bis zur Homogenität vermischt und vermahlt. Als Trägerstoffe kommen beispielsweise die vorstehend für die festen Aufarbeitungsformen erwähnten in Frage. In manchen Fällen ist es vorteilhaft, Mischungen verschiedener Trägerstoffe zu verwenden. Als Dispergatoren können beispielsweise verwendet werden: Kondensations-produkte von sulfoniertem Naphthalin und sulfonierten Napthalinderivaten mit Formaldehyd, Kondensations-produkte des Naphthalins bzw. von Naphthalinsulfonsäuren mit Phenol und Formaldehyd sowie Alkalimetall-Ammonium- und Erdalkalimetallsalze von Ligninsulfonsäure, weiter Alkylarylsulfonate, Alkali- und Erdalkalimetallsalze der Dibutylnaphthalinsulfonsäure, Fettalkohol sulfate, wie Salze sulfatierter Hexadecanole, Heptadecanole und Salze von sulfatiertem Fettalkoholpolyäthylenglykoläther, das Natriumsalz von Oleylmethyltaurid, ditertiäre Acetylenglykole, Dialkyldilaurylammoniumchlorid und fettsäure Alkali- und Erdalkalimetallsalze.

Als Antischaummittel kommen zum Beispiel Silicone in Frage.

Die Wirkstoffe werden mit den oben aufgeführten Zusätzen so vermischt, vermahlen, gesiebt und passiert, dass bei den Spritzpulvern der feste Anteil eine Korngrösse von 0,02 bis 0,04 und bei den Pasten von 0,03 mm nicht überschreitet. Zur Herstellung von Emulsionskonzentraten und Pasten werden Dispergiermittel, wie sie in den vorangehenden Abschnitten aufgeführt wurden, organische Lösungsmittel und Wasser verwendet. Als Lösungsmittel kommen beispielsweise die folgenden in Frage: Alkohole, Xylole, Toluol, Dimethylsulfoxid, N,N-dialkylierte Amide und Trialkylamine. Die Lösungsmittel müssen praktisch geruchlos, nicht phytotoxisch, den Wirkstoffen gegenüber inert und dürfen nicht leicht brennbar sein.

Ferner können die erfindungsgemässen Mittel in Form von Lösungen angewendet werden. Hierzu wird der Wirkstoff bzw. werden mehrere Wirkstoffe der Formel I in geeigneten organischen Lösungsmitteln, Lösungsmittelgemischen, Wasser oder Gemischen von organischen Lösungsmitteln mit Wasser gelöst. Als organische Lösungsmittel können aliphatische und aromatische Kohlenwasserstoffe, deren chlorierte Derivate, Alkylnaphthaline, allein oder als Mischung untereinander verwendet werden.

Der Gehalt an Wirkstoff in den oben beschriebenen Mitteln liegt zwischen 0,1 bis 95%, bevorzugt zwischen 1 bis 80%. Anwendungsformen können bis hinab zu 0,001% verdünnt werden. Die Aufwandmengen betragen in der Regel 0,06 bis 10 kg AS/ha, vorzugsweise 0,25 bis 4 kg AS/ha. Die Wirkstoffe der Formel I können beispielsweise wie folgt formuliert werden (Teile bedeuten Gewichtsteile):

*Spritzpulver*

Zur Herstellung eines a) 50%igen, b) 25%igen und c) 10%igen Spritzpulvers werden folgende Bestandteile verwendet:

a) 50 Teile 4-(p-Trifluormethyl-phenoxy)-$\alpha$-phenoxy-propionsäure-(3-methoxy)-propyl-(2)-amid,
5 Teile Natriumdibutylnaphthylsulfonat,
3 Teile Naphthalinsulfonsäuren-Phenolsulfonsäuren-Formaldehyd-Kondensat 3:2:1,
20 Teile Kaolin,
22 Teile Champagne-Kreide;

b) 25 Teile 4-(p-Trifluormethyl-phenoxy)-$\alpha$-phenoxy-propionsäure-(2-methoxy)-äthylamid,
5 Teile Oleylmethyltaurid-Natrium-Salz,
2,5 Teile Naphthalinsulfonsäuren-Formaldehyd-Kondensat,
0,5 Teile Carboxymethylcellulose,
5 Teile neutrales Kalium-Aluminium-Silikat,
62 Teile Kaolin;

c) 10 Teile eines der obigen Wirkstoffe,
3 Teile Gemisch der Natriumsalze von gesättigten Fettalkoholen,
5 Teile Naphthalinsulfonsäuren-Formaldehyd-Kondensat,
82 Teile Kaolin.

Der angegebene Wirkstoff wird auf die entsprechenden Trägerstoffe (Kaolin und Kreide) aufgezogen und anschliessend vermischt und vermahlen. Man erhält Spritzpulver von vorzüglicher Benetzbarkeit und Schwebefähigkeit. Aus solchen Spritzpulvern können durch Verdünnen mit Wasser Suspensionen jeder gewünschten Wirkstoffkonzentration erhalten werden. Derartige Suspensionen werden zur Bekämpfung von Unkräutern und Ungräsern in Kulturpflanzungen verwendet.

*Paste*

Zur Herstellung einer 45%igen Paste werden folgende Stoffe verwendet:

45 Teile 4-(p-Trifluormethyl-phenoxy)-$\alpha$-phenoxy-propionsäure-(3-äthoxy)-propyl-(1)-amid,

5 Teile Natriumaluminiumsilikat,

14 Teile Cetylpolyäthylenglykoläther mit 8 Mol Aethylenoxid,

1 Teile Oleylpolyäthylenglykoläther mit 5 Mol Aethylenoxid,

2 Teile Spindelöl,

23 Teile Wasser,

10 Teile Polyäthylengylkol.

Der Wirkstoff wird mit den Zuschlagstoffen in dazu geeigneten Geräten innig vermischt und vermahlen. Man erhält eine Paste, aus der sich durch Verdünnen mit Wasser Suspensionen jeder gewünschten Konzentration herstellen lassen.

*Emulsionskonzentrat*

Zur Herstellung eines 25%igen Emulsionskonzentrates werden

25 Teile 4-(p-Trifluormethyl-phenoxy)-$\alpha$-phenoxy-propionsäure-(3-äthoxy)-propyl-(1)-amid,

10 Teile Mischung von Nonylphenolpolyoxyäthylen und Calcium-dodecylbenzol-sulfonat,

10 Teile Cyclohexanon

55 Teile Xylol

miteinander vermischt. Dieses Konzentrat kann mit Wasser zu Emulsionen auf geeignete Konzentrationen verdünnt werden.

Anstatt des jeweiligen in den vorhergehenden Formulierungsbeispielen angegebenen Wirkstoffs kann auch eine andere der von der Formel I umfassten Verbindungen verwendet werden.

Effindungsgemässe Mittel, die als aktive Komponente mindestens eine Verbindung der Formel I enthalten, eignen sich besonders zur selektiven Bekämpfung monocotyler Ungräser in pre- und insbesondere post-emergenter Anwendung in Kulturpflanzenbeständen, wie z.B. Soja, Baumwolle, Zuckerrohr etc.

Zum Nachweis der Brauchbarkeit als Herbizide (pre- und post-emergent) und zum Beweis der Ueberlegenheit gegenüber bekannten Wirkstoffen ähnlicher Struktur dienen folgende Testmethoden:

*Pre-emergente Herbizid-Wirkung* (Keimhemmung)

Im Gewächshaus wird unmittelbar nach der Einsaat der Versuchspflanzen in Saatschalen die Erdoberfläche mit einer wässerigen Dispersion der Wirkstoffe, erhalten aus einem 25%-igen Emulsionskonzentrat resp. aus einem 25%-igen Spritzpulver mit Wirkstoffen, die wegen ungenügender Löslichkeit nicht als Emulsionskonzentrat hergestellt werden können, behandelt. Es wurden vier verschiedene Konzentrationsreihen angewendet, entsprechend 4, 2, 1 und 0,5 kg Wirksubstanz pro Hektar. Die Saatschalen werden im Gewächshaus bei 22—25°C und 50—70% rel. Luftfeuchtigkeit gehalten und der Versuch nach 3 Wochen ausgewertet und die Resultate nach folgender Notenskala bonitiert:

1 = Pflanzen nicht gekeimt oder total abgestorben

2—3 = sehr starke Wirkung

4—6 = mittlere Wirkung

7—8 = geringe Wirkung

9 = keine Wirkung (wie unbehandelte Kontrolle)

als Versuchspflanzen dienen:

| | |
|---|---|
| hordeum (Gerste) | setaria italica |
| triticum (Weizen) | echinochloa crus galli |
| zea (Mais) | beta vulgaris |
| sorghum hybr. (Hirse) | sida spinosa |
| oryza (Reis) | sesbania exaltata |
| glycine (Soja) | amaranthus retroflexus |
| gossypium (Baumwolle) | sinapis alba |
| avena fatua | ipomoea purpurea |
| lolium perenne | galium aparine |
| alopecurus myosuroides | pastinaca sativa |
| bromus tectorum | rumex sp. |
| cyperus esculentus | chrysanthemum leucum. |
| rottboellia exaltata | abutilon sp. |
| digitaria sanguinalis | solanum nigrum |

*Post-emergente Herbizid-Wirkung (Kontakherbizid)*

Eine grössere Anzahl (mindestens 7) Unkräuter und Kulturpflanzen, sowohl monocotyle wie dicotyle, wurden nach dem Auflaufen (im 4-bis-6-Blattstadium) mit einer wässerigen Wirkstoffdispersion in Dosierungen von 0,06; 0,125; 0,25; 0,5 kg Wirksubstanz pro Hektar auf die Pflanzen gespritzt und diese bei 24°—26°C und 45—60% rel. Luftfeuchtigkeit gehalten. 15 Tage nach Behandlung wird der Versuch ausgewertet und das Ergebnis wie im pre-emergent-Versuch nach derselben Notenskala bonitiert.

Als Kulturpflanzen in diesem Test dienten Soja, Baumwolle und Zuckerrübe. Als monokotyle Unkräuter wurden acht Pflanzen aus der im pre-Emergenztest gegebenen Liste ausgewählt.

Als bekannte Vergleichssubstanzen dienten folgende Verbindungen des Standes der Technik:

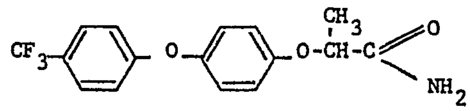

A

(DT—OS 2 639 796)

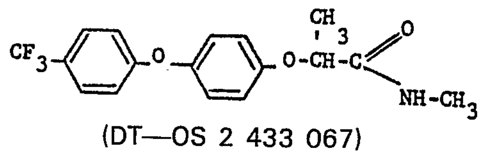

B

(DT—OS 2 433 067)

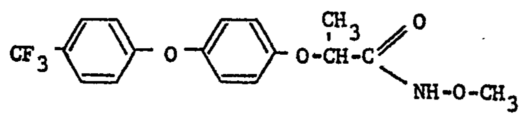

C

(Jap. OLS 52—130912)

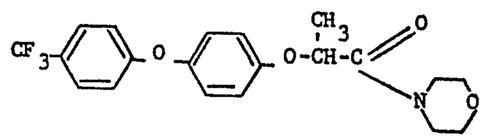

D

(DT—OS 2 531 643)

Die geprüften erfindungsgemässen Wirkstoffe entsprechen der Nummerierung in der Tabelle nach dem Beispiel.

Ergebnisse:

| Verbindung | Aufwandmenge in g/ha | Avena | Lolium | Alopecurus | Bromus | Rottboellia | Digitaria | Setaria | Echinochloa | Soya | Baumwolle | Zuckerrübe |
|---|---|---|---|---|---|---|---|---|---|---|---|---|
| A | 500 | 9 | 6 | 5 | 7 | 9 | 2 | 2 | 1 | 9 | 9 | 9 |
| | 250 | 9 | 8 | 6 | 8 | 9 | 3 | 2 | 1 | 9 | 9 | 9 |
| | 125 | 9 | 9 | 6 | 9 | 9 | 4 | 2 | 2 | 9 | 9 | 9 |
| | 60 | 9 | 9 | 6 | 9 | 9 | 5 | 2 | 3 | 9 | 9 | 9 |
| B | 500 | 3 | 2 | 3 | 9 | 4 | 1 | 1 | 1 | 9 | 9 | 9 |
| | 250 | 4 | 4 | 3 | 9 | 7 | 2 | 1 | 1 | 9 | 9 | 9 |
| | 125 | 7 | 8 | 9 | 9 | 9 | 2 | 1 | 2 | 9 | 9 | 9 |
| | 60 | 9 | 9 | 9 | 9 | 9 | 3 | 4 | 3 | 9 | 9 | 9 |
| C | 500 | 7 | 6 | 3 | 6 | 3 | 1 | 1 | 1 | 9 | 9 | 9 |
| | 250 | 7 | 7 | 4 | 9 | 7 | 1 | 1 | 1 | 9 | 9 | 9 |
| | 125 | 9 | 9 | 6 | 9 | 8 | 3 | 2 | 1 | 9 | 9 | 9 |
| | 60 | 9 | 9 | 7 | 9 | 9 | 3 | 2 | 4 | 9 | 9 | 9 |
| D | 500 | 9 | 9 | 7 | 9 | 9 | 5 | 1 | 9 | 9 | 9 | 9 |
| | 250 | 9 | 9 | 7 | 9 | 9 | 6 | 2 | 9 | 9 | 9 | 9 |
| | 125 | 9 | 9 | 8 | 9 | 9 | 9 | 3 | 9 | 9 | 9 | 9 |
| | 60 | 9 | 9 | 9 | 9 | 9 | 9 | 4 | 9 | 9 | 9 | 9 |

| Verbindung No. | Aufwandmenge in g/ha | Avena | Lolium | Alopecurus | Bromus | Rottboellia | Digitaria | Setaria | Echinochloa | Soya | Baumwolle | Zuckerrübe |
|---|---|---|---|---|---|---|---|---|---|---|---|---|
| 1 | 500 | 1 | 1 | 1 | 1 | 1 | 1 | 1 | 1 | 9 | 7 | 9 |
| | 250 | 1 | 2 | 2 | 2 | 1 | 1 | 1 | 1 | 9 | 8 | 9 |
| | 125 | 3 | 2 | 2 | 2 | 1 | 1 | 1 | 1 | 9 | 9 | 9 |
| | 60 | 4 | 3 | 3 | 4 | 1 | 1 | 1 | 1 | 9 | 9 | 9 |
| 2 | 500 | 1 | 1 | 1 | 1 | 1 | 1 | 1 | 1 | 9 | 7 | 9 |
| | 250 | 1 | 1 | 1 | 2 | 1 | 1 | 1 | 1 | 9 | 7 | 9 |
| | 125 | 2 | 2 | 2 | 2 | 1 | 1 | 1 | 1 | 9 | 9 | 9 |
| | 60 | 7 | 6 | 3 | 4 | 1 | 1 | 1 | 1 | 9 | 9 | 9 |
| 4 | 500 | 1 | 1 | 1 | 1 | 1 | 1 | 1 | 1 | 9 | 8 | 9 |
| | 250 | 1 | 1 | 2 | 2 | 1 | 1 | 1 | 1 | 9 | 9 | 9 |
| | 125 | 3 | 2 | 2 | 3 | 1 | 1 | 1 | 1 | 9 | 9 | 9 |
| | 60 | 6 | 2 | 3 | 4 | 1 | 1 | 1 | 1 | 9 | 9 | 9 |
| 5 | 500 | 1 | 1 | 1 | 2 | 1 | 1 | 1 | 1 | 9 | 9 | 9 |
| | 250 | 1 | 2 | 2 | 2 | 1 | 1 | 1 | 1 | 9 | 9 | 9 |
| | 125 | 4 | 3 | 2 | 3 | 1 | 1 | 1 | 1 | 9 | 9 | 9 |
| | 60 | 7 | 4 | 3 | 6 | 2 | 1 | 1 | 1 | 9 | 9 | 9 |
| 6 | 500 | 2 | 2 | 3 | 3 | 1 | 1 | 1 | 1 | 9 | 9 | 9 |
| | 250 | 6 | 3 | 6 | 4 | 1 | 1 | 1 | 1 | 9 | 9 | 9 |
| | 125 | 8 | 5 | 6 | 9 | 1 | 1 | 1 | 1 | 9 | 9 | 9 |
| | 60 | 9 | 9 | 6 | 9 | 5 | 1 | 1 | 2 | 9 | 9 | 9 |

In pre-emergent-Test wurden ebenfalls gute Ergebnisse erzielt, wobei Verbindung No. 4 am besten abschnitt.

## Patentansprüche

1. Neue herbizid wirksame 4-(p-Trifluormethylphenoxy)-$\alpha$-phenoxy-propionsäure-alkoxyalkylamide der Formel I

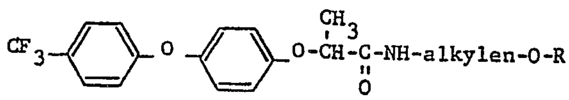 (I)

worin "alkylen" eine gerade oder verzweigte gesättigte Kohlenwasserstoffkette mit 1 bis 4 C-Atomen und

R einen Alkylrest mit 1 bis 4 C-Atomen bedeuten.

2. 4-(p-Trifluormethylphenoxy)-$\alpha$-phenoxy-propionsäure-alkoxyalkylamide gemäss Patentanspruch 1, dadurch gekennzeichnet, dass "alkylen" in der Formel I die Aethylenkette $—CH_2—CH_2—$ oder eine gerade oder verzweigte Propylenkette darstellt.

3. Die Verbindung 4-(p-Trifluormethylphenoxy)-$\alpha$-phenoxy-propionsäure-N-(2-methoxy)-äthylamid.

4. Die Verbindung 4-(p-Trifluormethylphenoxy)-$\alpha$-phenoxy-propionsäure-N-(3-methoxy)-propyl-(2)-amid.

5. Verfahren zur Herstellung der neuen 4-(p-Trifluormethyl-phenoxy)-$\alpha$-phenoxy-propionsäure-alkoxyalkylamide der Formel I des Patentanspruchs 1, dadurch gekennzeichnet, dass man ein Halogenid oder einen niederen Alkylester der 4-(p-Trifluormethyl-phenoxy)-$\alpha$-phenoxy-propionsäure mit einem Alkoxyalkylamin der Formel III

$$H_2N—alkylen—O—R \qquad (III)$$

worin "alkylen" und R die unter Formel I gegebenen Bedeutungen haben, in an sich bekannter Weise umsetzt.

6. Verfahren zur Herstellung der neuen 4-(p-Trifluormethyl-phenoxy)-$\alpha$-phenoxy-propionsäure-alkoxyalkylamide der Formel I des Patentanspruchs 1, dadurch gekennzeichnet, dass man den Hydroxydiphenyläther oder ein Salz desselben von der Formel IV

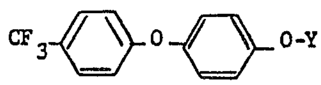 (IV)

worin Y Wasserstoff oder das Aequivalent eines Alkalimetall- oder Erdalkalimetallkations bedeutet, mit einem $\alpha$-Halogen-propionsäure-alkoxyalkylamid der

Formel V

$$Hal—CH(CH_3)—CO—NH—alkylen—O—R \qquad (V)$$

in Gegenwart eines säurebindenden Mittels umsetzt.

7. Herbizides Mittel, dadurch gekennzeichnet, dass es als wirksame Komponente ein 4-(p-Trifluormethyl-phenoxy)-$\alpha$-phenoxy-propionsäure-alkoxyalkylamid der Formel I des Patentanspruchs 1 enthält.

8. Die Verwendung der 4-(p-Trifluormethyl-phenoxy)-$\alpha$-phenoxy-propionsäure-alkoxyalkylamide der Formel I des Patentanspruchs 1 zur Bekämpfung von monocotylen Unkräutern.

9. Die Verwendung gemäss Patentanspruch 8 zur selektiven Bekämpfung von monocotylen Unkräutern in Kulturpflanzenbeständen.

## Revendications

1. Nouveaux alcoxyalkylamides d'acide 4-(p-trifluorométhyl-phénoxy)-$\alpha$-phénoxy-propionique possédant une activité herbicide et répondant à la formule I

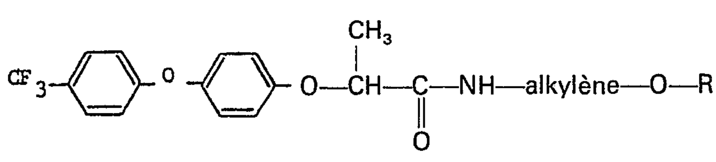 (I)

dans laquelle "alkylène" représente une chaîne hydrocarbonée saturée droite ou ramifiée en C 1—C 4, et

R représente un groupe alkyle en C 1—C 4

2. Alcoxyalkylamides d'acide 4(p-trifluorométhyl-phénoxy)-$\alpha$-phénoxy-propionique selon la revendication 1, caractérisés en ce que "alkylène", dans la formule I, représente la chaîne éthylène —$CH_2$—$CH_2$— ou une chaîne propylène droite ou ramifiée.

3. Le composé N-(2-méthoxy)-éthylamide d'acide 4-(p-trifluorométhyl-phénoxy)-$\alpha$-phénoxy-propionique selon la revendication 1.

4. Le composé N-(3-méthoxy)-propyl-(2)-amide de l'acide 4-(p-trifluorométhyl-phénoxy)-$\alpha$-phénoxy-propionique.

5. Procédé de préparation des nouveaux alcoxyalkylamides d'acide 4-(p-trifluorométhyl-phénoxy)-$\alpha$-phénoxy-propionique de formule I selon la revendication 1, caractérisé en ce que l'on fait réagir de manière connue en soi un halogénure ou un ester alkylique inférieur de l'acide 4-(p-trifluorométhyl-phénoxy)-$\alpha$-phénoxy-propionique avec une alcoxyalkylamine de formule III

$H_2N$—alkylène—O—R (III)

dans laquelle "alkylène" et R ont les significations indiquées en référence à la formule I.

6. Procédé de préparation des nouveaux alcoxyalkylamides d'acide 4-(p-trifluorométhyl-phénoxy)-$\alpha$-phénoxy-propionique de formule I selon la revendication 1, caractérisé en ce que l'on fait réagir l'ether hydroxy-diphénylique ou un sel de cet éther, répondant à la formule IV

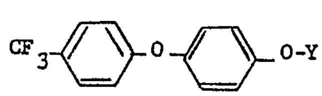

(IV)

dans laquelle Y représente l'hydrogène ou l'équivalent d'un cation de métal alcalin ou alcalino-terreux, avec un alcoxyalkylamide d'acide $\alpha$-halogéno-propionique de formule V

$CH_3$
|
Hal—CH—CO—NH—alkylène—O—R (V)

en présence d'un agent fixant les acides.

7. Produit herbicide caractérisé en ce qu'il contient en tant que composant actif un alcoxyalkylamide d'acide 4-(p-trifluorométhyl-phénoxy)-$\alpha$-phénoxy-propionique de formule I selon la revendication 1.

8. L'utilisation des alcoxyalkylamides d'acide 4-(p-trifluorométhyl-phénoxy)-$\alpha$-phénoxy-propionique de formule I selon la revendication 1 dans la lutte contre les mauvaises herbes monocotylédones.

9. L'utilisation selon la revendication 8 pour la lutte sélective contre les mauvaises herbes monocotylédones dans les cultures.

**Claims**

1. A herbicidally active 4-(p-trifluoromethylphenoxy)-$\alpha$-phenoxypropionic acid alkoxyalkyl amide of the formula I

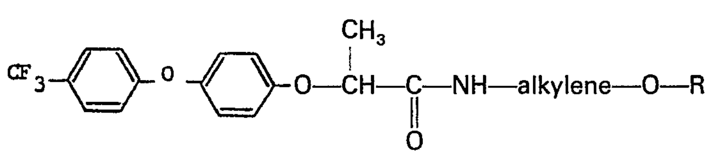

(I)

wherein "alkylene" represents a straight or branched saturated hydrocarbon chain of 1 to 4 carbon atoms and R represents an alkyl radical of 1 to 4 carbon atoms.

2. A 4-(p-trifluoromethylphenoxy)-$\alpha$-phenoxypropionic acid alkoxyalkyl amide according to claim 1, characterised in that "alkylene" in formula I represents the ethylene chain —$CH_2$—$CH_2$— or a straight or branched propylene chain.

3. 4-(p-Trifluoromethylphenoxy)-$\alpha$-phenoxypropionic acid N-(2-methoxy)-ethylamide according to claim 1.

4. 4-(p-Trifluoromethylphenoxy)-$\alpha$-phenoxypropionic acid N-(3-methoxy)-propyl-(2)-amide.

5. A process for the manufacture of a 4-(p-trifluoromethylphenoxy)-$\alpha$-phenoxypropionic acid alkoxyalkyl amide of the formula I according to claim 1, characterised in that a halide or a lower alkyl

ester of 4-(p-trifluoromethylphenoxy)-$\alpha$-phenoxypropionic acid is reacted in a manner known per se with an alkoxyalkylamine of the formula III

$$H_2N—alkylene—O—R \qquad (III)$$

wherein "alkylene" and R are as defined for formula I.

6. A process for the manufacture of a 4-(p-trifluoromethylphenoxy)-$\alpha$-phenoxypropionic acid alkoxyalkyl amide of the formula I of claim 1 according to claim 1, characterised in that the hydroxydiphenyl ether, or a salt thereof, of the formula IV

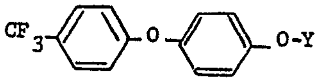

(IV)

wherein Y represents hydrogen or the equivalent of an alkali metal cation or alkaline earth metal cation, is reacted with an $\alpha$-halopropionic alkoxyalkyl amide of the formula V

$$Hal—\underset{\displaystyle CH_3 \atop |}{}CH—CO—NH—alkylene—O—R \qquad (V)$$

in the presence of an acid acceptor.

7. A herbicidal composition which contains, as active component, a 4-(p-trifluoromethylphenoxy)-$\alpha$-phenoxypropionic acid alkoxyalkyl amide of the formula I according to claim 1.

8. A method of controlling monocotyledonous weeds which comprises the use of a 4-(p-trifluoromethylphenoxy)-$\alpha$-phenoxypropionic acid alkoxyalkyl amide of the formula I according to claim 1.

9. A method according to claim 8 of selectively controlling monocotyledonous weeds in crops of cultivated plants.